(19) Europäisches Patentamt / European Patent Office / Office européen des brevets

(11) **EP 4 071 076 A1**

(12) **EUROPEAN PATENT APPLICATION**

(43) Date of publication:
**12.10.2022 Bulletin 2022/41**

(21) Application number: **22162687.2**

(22) Date of filing: **17.03.2022**

(51) International Patent Classification (IPC):
**B65D 30/20** $^{(2006.01)}$  **B65D 33/00** $^{(2006.01)}$
**B65D 33/22** $^{(2006.01)}$  **B65D 33/26** $^{(2006.01)}$

(52) Cooperative Patent Classification (CPC):
**B65D 31/10; B65D 33/005; B65D 33/22; B65D 33/26**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.04.2021 JP 2021064905**

(71) Applicant: **Sumitomo Chemical Company, Limited Tokyo 103-6020 (JP)**

(72) Inventors:
• **NAGATE, Hotaka**
  **Ichihara-shi, Chiba, 299-0195 (JP)**
• **YASUNAGA, Tomokazu**
  **Niihama-shi, Ehime, 792-8521 (JP)**

(74) Representative: **Global IP Europe Patentanwaltskanzlei Pfarrstraße 14 80538 München (DE)**

(54) **PACKAGE FOR A GRANULAR MATERIAL**

(57)  Package (10) that can be stably stacked in multiple layers and can reduce damage of falling impact. A bag (1) contains a granular material (A). The package includes a container (1) containing the granular material (A), and a one-end-side closing part (1b) closing the container at one end side in a first direction (x) and extending in a second direction (y), in which an interval (X) between one end edge and one-end-side closing part (1b) of the bag (1) in the first direction satisfies the following mathematical formula (A): 5 mm ≤ X. The container has a length (c) of 40 cm to 100 cm in the first direction, a length (b) of 30 cm to 60 cm in the second direction, and a length (a) of 5 cm to 30 cm in the third direction, and satisfies the following mathematical formula (B): a/b < 0.48.

[Fig. 1]

EP 4 071 076 A1

**Description**

BACKGROUND OF THE INVENTION

Field of the Invention

The present invention relates to a package in which a bag contains a granular material.

Description of the Related Art

There is a bag described in JP-A-2008-308174 for example, as a bag for containing a granular material used as a raw material or the like of industrial products. By containing granular materials in such bags and sealing the bags to form packages, a plurality of packages can be stacked. Thus, the granular materials can be efficiently stored and conveyed.

However, depending on a shape of the plurality of stacked packages as described above, the packages may be off balance, and an upper package thereof may fall. In addition, the package may be damaged by an impact of when the package falls.

An object of the present invention is to provide a package that can be stably stacked in multiple layers and can reduce damage of falling impact.

SUMMARY OF THE INVENTION

A package according to the present invention is a package in which a bag contains a granular material, the package including

a container containing the granular material, and
a one-end-side closing part closing the container at one end side in a first direction and extending in a second direction intersecting the first direction, in which
an interval X between one end edge and one-end-side closing part of the bag in the first direction satisfies the following mathematical formula (A), and
when placed on a horizontal placement surface such that a third direction intersecting the first direction and the second direction corresponds to a vertical direction, the container has a length (c) of 40 cm to 100 cm in the first direction, a length (b) of 30 cm to 60 cm in the second direction, and a length (a) of 5 cm to 30 cm in the third direction, and satisfies the following mathematical formula (B).

$$5 \text{ mm} \leq X \ldots (A)$$

$$a/b < 0.48 \ldots (B)$$

According to the present invention, it is possible to provide a package that can be stably stacked in multiple layers and can reduce damage of falling impact.

BRIEF DESCRIPTION OF THE DRAWINGS

Fig. 1 is a perspective view of a package according to a first embodiment of the present invention;
Fig. 2 is a perspective view of a bag that constitutes the package according to the first embodiment;
Fig. 3 is a plan view of the bag that constitutes the package according to the first embodiment;
Fig. 4 is a plan view of the package according to the first embodiment as viewed from above, the package being in a placed state;
Fig. 5 is a cross-sectional view taken along the line I-I in Fig. 4;
Fig. 6 is a perspective view of a package according to a second embodiment of the present invention; and
Fig. 7 is a perspective view of a bag that constitutes the package according to the second embodiment.

DETAILED DESCRIPTION OF THE PREFERRED EMBODIMENTS

Hereinafter, embodiments of the present invention will be described with reference to the drawings.

In the following drawings, the same or corresponding parts are denoted by the same reference numerals, and description thereof will not be repeated. In the following description, a first direction is a direction along an x axis in each figure, a second direction is a direction along a y axis in each figure, and a third direction is a direction along a z axis in each figure.

<First embodiment>

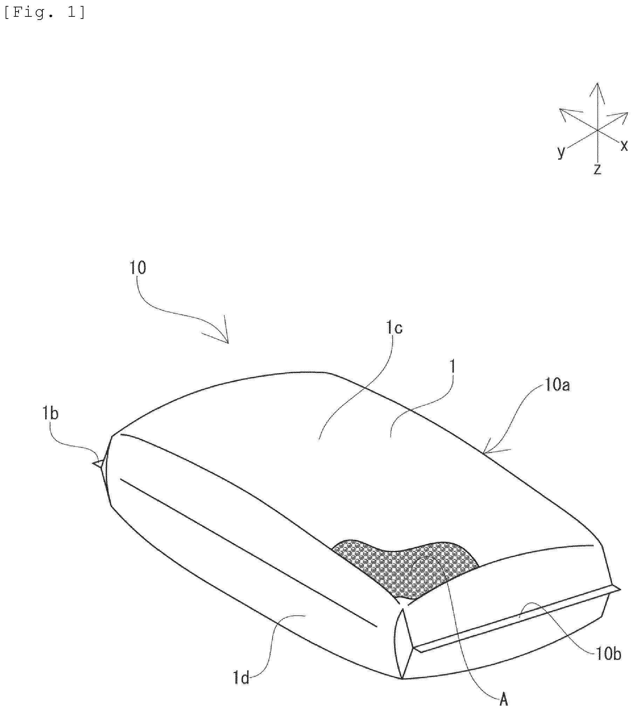

As illustrated in Figs. 1 to 5, a package 10 according to the present embodiment is a package in which a bag 1 contains a granular material A. Examples of the granular material A include, but not limited to, polymer pellets, gravel, sand, and the like, and the granular material A is preferably polymer pellets. Examples of the polymer pellets include, but not limited to, pellets of polyolefin or the like (specifically, pellets of polyethylene, pellets of polypropylene, or the like). Mass of the granular material A in the package 10 is not particularly limited, and is preferably 5 kg to 40 kg, more preferably 10 kg to 30 kg, and even more preferably 20 kg to 30 kg. The granular material A is preferably sized so as to pass through a 10 mm sieve and not to pass through a 1.5 mm sieve, and is more preferably sized so as to pass through a 5.60 mm sieve and not to pass through a 2.36 mm sieve. Mass of the package 10 is not particularly limited, and is preferably 5 kg to 40 kg, more preferably 10 kg to 30 kg, and even more preferably 20 kg to 30 kg.

In the present embodiment, the bag 1 is formed of a paper sheet material. Basis weight of the paper sheet material is not particularly limited, and is preferably 100 $g/m^2$ to 400 $g/m^2$, more preferably 200 $g/m^2$ to 300 $g/m^2$, and even more preferably 220 $g/m^2$ to 280 $g/m^2$. The paper sheet material may be formed of a plurality of laminated paper sheets, or may be formed of a single paper sheet.

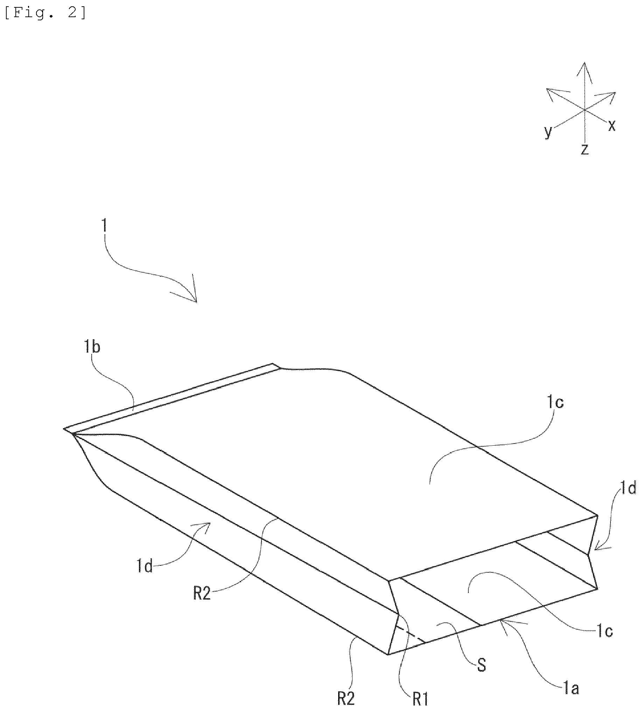

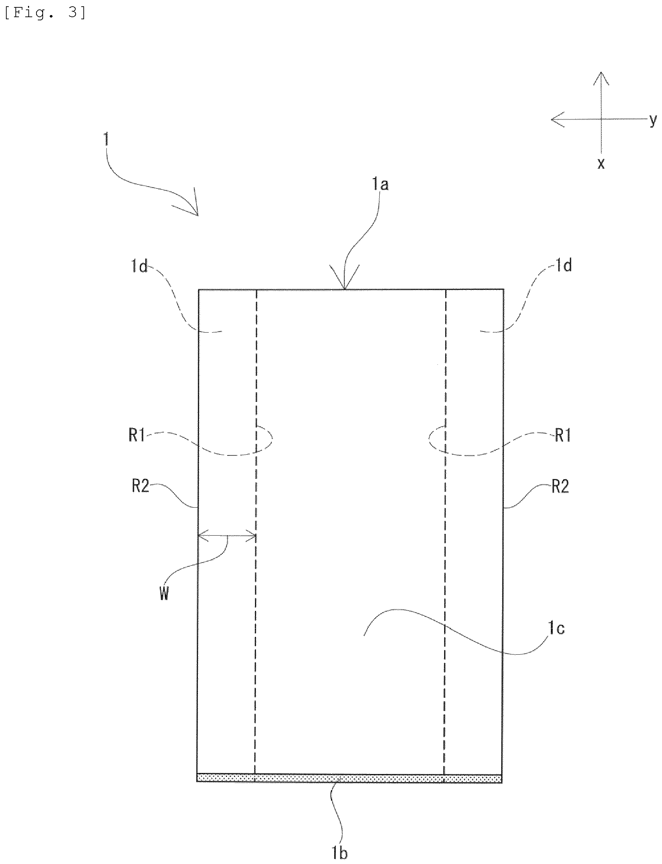

As illustrated in Figs. 2 and 3, when not containing the granular material A (when a one-end-side closing part 10b to be described below is not formed), the bag 1 includes an opening part 1a formed at one end part in the first direction, and an another-end-side closing part 1b closing inner space of the bag 1 at another end side thereof in the first direction and extending in the second direction intersecting the first direction. In addition, the bag 1 includes a pair of facing parts 1c, 1c facing each other in the third direction intersecting the first direction and the second direction, and a pair of gusset parts 1d, 1d formed on both sides in the second direction and foldable between the pair of facing parts 1c, 1c. Furthermore, the bag 1 includes an overlapping part S obtained by regions on both end sides in the second direction of the sheet material being overlapped and joined together. The overlapping part S is formed on one of the pair of facing parts 1c, 1c.

Each facing part 1c is formed such that both end edges in the first direction extend in the second direction (specifically, in a linear manner), and formed such that both the end edges in the second direction extend in the first direction (specifically, in a linear manner). That is, in the present embodiment, each facing part 1c is formed in a rectangular shape (specifically, a rectangular shape of which longitudinal direction corresponds to the first direction). A length of both the end edges in the second directions of each facing part 1c (in the present embodiment, a length of a long side of a rectangular facing part 1c) is not particularly limited, and is preferably 60 cm to 100 cm, more preferably 70 cm to 90 cm, even more preferably 75 cm to 90 cm, and particularly preferably 80 cm to 90 cm.

The pair of gusset parts 1d, 1d is joined to both the end edges in the second direction of one facing part 1c and to both the end edges in the second direction of another facing part 1c. When a gusset part 1d is folded between the pair of facing parts 1c, 1c, a ridgeline part (hereinafter, also referred to as a gusset ridgeline part) R1 extending in the first direction is formed on the gusset part 1d. In addition, when the gusset part 1d is folded between the pair of facing parts 1c, 1c, two ridgeline parts (hereinafter, also referred to as joining position ridgeline parts) R2, R2 extending in the first direction is formed at a joining position of the gusset part 1d and the pair of facing parts 1c, 1c. In the present embodiment, the gusset ridgeline part R1 and the joining position ridgeline parts R2, R2 are formed substantially parallel to one another. A folded width W of a gusset part 1d is not particularly limited, and is preferably 3 cm to 15 cm, and more preferably 5 cm to 10 cm. The folded width W is a shortest length from a center in a longitudinal direction of the gusset ridgeline part R1 to one joining position ridgeline part R2 when the gusset part 1d is completely folded.

The opening part 1a is formed by one end part of the pair of facing parts 1c, 1c in the first direction and one end part of the pair of gusset parts 1d, 1d in the first direction. In addition, the pair of facing parts 1c, 1c are joined together at another end part in the first direction of the pair of facing parts 1c, 1c, thereby forming the another-end-side closing part 1b.

Specifically, the another-end-side closing part 1b includes a part where the pair of facing parts 1c, 1c are indirectly joined together via the pair of gusset parts 1d, 1d at both ends in the second direction. In each of regions between both the ends in the second direction, the another-end-side closing part 1b includes a region where the pair of facing parts 1c, 1c are directly joined together. More specifically, at both the ends in the second direction of the another-end-side closing part 1b, opposing surfaces are joined together with each gusset part 1d completely folded, and the opposing surfaces of each gusset part 1d and each facing part 1c are joined together. At the regions between both the ends in the second direction of the another-end-side closing part 1b, the opposing surfaces of the pair of facing parts 1c, 1c are directly joined together.

In addition, at least a part (in the present embodiment, an entire) of the another-end-side closing part 1b is formed at a position separated from another end edge in the first direction of the bag 1. An interval from the another end edge to another-end-side closing part 1b in the first direction of the bag 1 is preferably 5 mm or more, more preferably more than 5 mm, and even more preferably 5 mm or more and 100 mm or less. The interval from the another end edge to another-end-side closing part 1b in the first direction of the bag 1 is an average value of a result of measuring an interval between each divided position obtained by equally dividing the another-end-side closing part 1b by 10 in the second direction, and the another end edge in the first direction of the bag 1 (an interval along the first direction).

A method for forming the another-end-side closing part 1b is not particularly limited, and may be, for example, a method for closing the another end part in the first direction of the bag 1 with sewing (specifically, by a sewing machine) in the second direction, a method for closing the another end part with heat sealing, a method for closing the another end part by using an adhesive or an adhesive sheet, or the like.

In a case where the another end part in the first direction of the bag 1 is sewn by using a string to form the another-end-side closing part 1b, the another-end-side closing part 1b is formed in a line extending in the second direction. In this case, the another-end-side closing part 1b is formed along the another end edge in the first direction of the bag 1 (specifically, in a substantially parallel manner).

A length of a stitch is not particularly limited, and is preferably 1 mm to 50 mm, more preferably 5 mm to 20 mm, and even more preferably 7.5 mm to 15 mm.

In a case where heat sealing is used to form the another-end-side closing part 1b, the another-end-side closing part 1b is formed in a shape of a band extending in the second direction. In this case, the band-shaped another-end-side closing part 1b is formed to have a substantially uniform width. In the band-shaped another-end-side closing part 1b, one end edge positioned at another end side in the first direction of the bag 1 is formed along the another end edge in the first direction of the bag 1 (specifically, in a substantially parallel manner), the one end edge being one end edge in a width direction. A width of the band-shaped another-end-side closing part 1b (that is, a width of the heat sealing) is not particularly limited, and is preferably 1 mm to 20 mm, more preferably 1.5 mm to 15 mm, and even more preferably 2 mm to 10 mm.

Returning to Fig. 1, the package 10 includes a container 10a containing the granular material A, and the one-end-side closing part 10b that closes the container 10a on one end side in the first direction and extends in the second direction. In addition, the package 10 includes the another-end-side closing part 1b (the another-end-side closing part 1b of the bag 1) that closes the container 10a at the another end side in the first direction.

The one-end-side closing part 10b is formed at the one end part in the first direction of the pair of facing parts 1c, 1c, by the pair of facing parts 1c, 1c being joined together. Specifically, at both ends in the second direction, the one-end-side closing part 10b includes a part where the pair of facing parts 1c, 1c are indirectly joined together via the pair of gusset parts 1d, 1d. In each of regions between both the ends in the second direction, the one-end-side closing part 10b includes a region where the pair of facing parts 1c, 1c are directly joined together. More specifically, at both the ends in the second direction of the one-end-side closing part 10b, the opposing surfaces are joined together with each gusset part 1d completely folded, and the opposing surfaces of each gusset part 1d and each facing part 1c are joined together. At the regions between both the ends in the second direction of the one-end-side closing part 10b, the opposing surfaces of the pair of facing parts 1c, 1c are directly joined together.

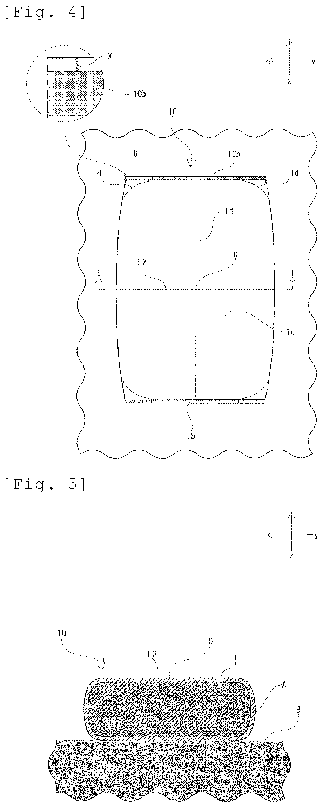

As illustrated in Fig. 4, at least a part (in the present embodiment, an entire) of the one-end-side closing part 10b is formed at a position separated from one end edge in the first direction of the bag 1. An interval X from the one end edge to one-end-side closing part 10b in the first direction of the bag 1 satisfies the following mathematical formula (A), preferably satisfies the following mathematical formula (A'), more preferably satisfies the following mathematical formula (A"), and even more preferably satisfies the following mathematical formula (A'''). The interval X is an average value of a result of measuring an interval between each divided position obtained by equally dividing the one-end-side closing part 10b by 10 in the second direction, and the one end edge in the first direction of the bag 1 (an interval along the first direction).

$$5 \text{ mm} \leq X...(A)$$

$$5 \text{ mm} < X...(A')$$

$$5 \text{ mm} < X \leq 100 \text{ mm} \quad (A'')$$

$$10 \text{ mm} \leq X \leq 80 \text{ mm} \ldots (A''')$$

A method for forming the one-end-side closing part 10b is not particularly limited, and may be, for example, a method for closing the one end part in the first direction of the bag 1 with sewing (specifically, by a sewing machine) in the second direction, a method for closing the one end part with heat sealing, a method for closing the one end part by using an adhesive or an adhesive sheet, or the like.

In a case where the one end part in the first direction of the bag 1 is sewn by using a string to form the one-end-side closing part 10b, the one-end-side closing part 10b is formed in a line extending in the second direction. In this case, the one-end-side closing part 10b is formed along the one end edge in the first direction of the bag 1 (specifically, in a substantially parallel manner). A length of a stitch is not particularly limited, and is preferably 1 mm to 50 mm, more preferably 5 mm to 20 mm, and even more preferably 7.5 mm to 15 mm.

In a case where heat sealing is used to form the one-end-side closing part 10b, the one-end-side closing part 10b is formed in a shape of a band extending in the second direction. In this case, the band-shaped one-end-side closing part 10b is formed to have a substantially uniform width. In the band-shaped one-end-side closing part 10b, one end edge positioned at the one end side in the first direction of the bag 1 is formed along the one end edge in the first direction of the bag 1 (specifically, in a substantially parallel manner), the one end edge being one end edge in the width direction. A width of the band-shaped one-end-side closing part 10b (that is, a width of the heat sealing) is not particularly limited, and is preferably 1 mm to 20 mm, more preferably 2 mm to 10 mm, and even more preferably 3 mm to 5 mm.

As illustrated in Figs. 4 and 5, when the package 10 is placed on a horizontal placement surface B such that the third direction corresponds to a vertical direction, and a granular material in the container 10a is leveled out (hereinafter, this state is also referred to as a placed state), a length (c) in the first direction of the container 10a is 40 cm to 100 cm, preferably 40 cm to 90 cm, and more preferably 40 cm to 80 cm. A length (b) in the second direction of the container 10a is 30 cm to 60 cm, and preferably 40 cm to 55 cm in the placed state. A length (a) in the third direction of the container 10a is 5 cm to 30 cm, preferably 5 cm to 20 cm, and more preferably 10 cm to 20 cm in the placed state.

In a plan view in which the package 10 in the placed state is viewed from above, the length (c) in the first direction is a length of an imaginary straight line (hereinafter, also referred to as a first imaginary line) L1 connecting centers of the both end edges of the container 10a in the first direction together, both the end edges extending in the second direction. In a plan view of the package 10 in the placed state, the length (b) in the second direction is a length of an imaginary straight line (hereinafter, also referred to as a second imaginary line) L2 connecting centers of both the end edges of the container 10a in the second direction together, both the end edges extending in the first direction. In the package 10 in the placed state, the length (a) in the third direction is a length of a vertical imaginary straight line L3 extending from an intersection C of the first imaginary line L1 and the second imaginary line L2 to the placement surface B.

In addition, the container 10a in the placed state satisfies the following mathematical formula (B), preferably satisfies the following formula (B'), and more preferably satisfies the following formula (B"). Note that a/b (aspect ratio) in the following mathematical formula (B) can be changed by adjusting the interval X from the one end edge to one-end-side closing part 10b in the first direction of the bag 1, or by adjusting mass of the granular material contained in the bag 1.

$$a/b < 0.48 \ldots (B)$$

$$a/b < 0.45 \ldots (B')$$

$$a/b \leq 0.41 \ldots (B'')$$

(a: Length of container 10a in third direction)
(b: Length of container 10a in second direction)

<Second embodiment>

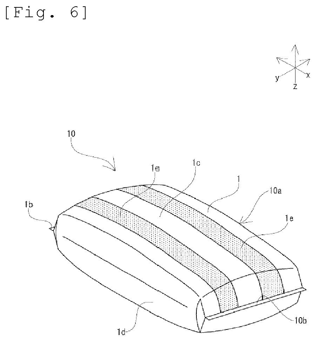

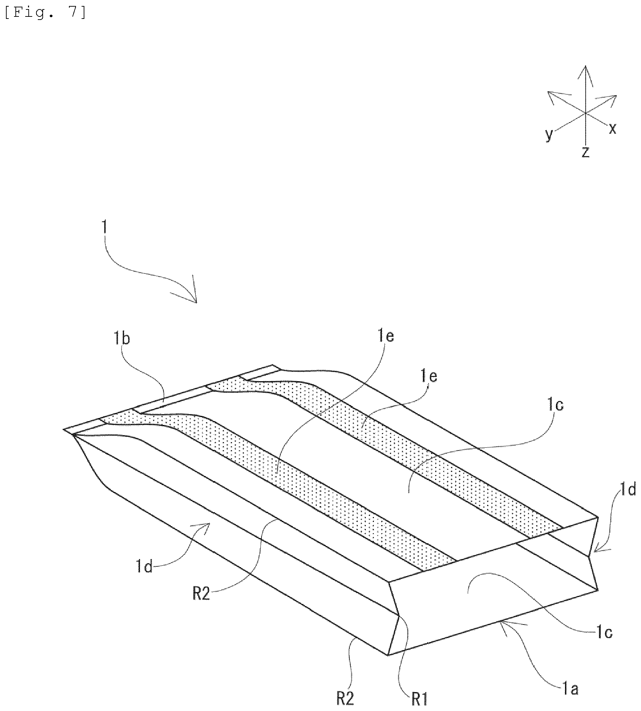

As illustrated in Figs. 6 and 7, a package 10 according to the present embodiment is different from the first embodiment mainly in a material forming a bag 1. Thus, differences from the first embodiment will be described below.

The bag 1 used in the present embodiment is formed of a resin sheet material. Basis weight of the resin sheet material is not particularly limited, and is preferably 100 g/m² to 300 g/m², more preferably 100 g/m² to 200 g/m², and even more preferably 140 g/m² to 200 g/m². The resin sheet material may be formed of a plurality of laminated resin sheets, or may be formed of a single resin sheet. Examples of the resin forming the resin sheet material include polyethylene, polypropylene, and the like.

In the present embodiment, in the bag 1, a pair of facing parts 1c, 1c and a pair of gusset parts 1d, 1d are formed by folding both sides in a second direction of a tubular sheet material inward, the sheet material extending in a first direction. Therefore, in the present embodiment, the overlapping part S in the first embodiment is not formed.

Then, one end part in the first direction of the bag 1 is closed to form a one-end-side closing part 10b, and another end part in the first direction of the bag 1 is closed to form an another-end-side closing part 1b. A method for forming the one-end-side closing part 10b and the another-end-side closing part 1b is not particularly limited, and for example, a method similar to the method in the first embodiment can be used.

The bag 1 includes embossed regions 1e including a plurality of irregularities on a surface of at least one (preferably both) of the pair of facing parts 1c, 1c. An embossed region 1e is formed in a shape of a band of which longitudinal direction corresponds to the first direction. In the present embodiment, the embossed regions 1e are continuously formed over an entire region of at least one (preferably both) of the pair of facing parts 1c, 1c in the first direction. A width of the band-shaped embossed region 1e is not particularly limited, and is preferably 3 cm to 15 cm, and more preferably 5 cm to 10 cm.

The embossed regions 1e are formed on a plurality of places. Specifically, a plurality of (in the present embodiment, two) embossed regions 1e is formed at an interval in the second direction. An interval between the embossed regions 1e is not particularly limited, and is preferably 1 cm to 10 cm, and more preferably 3 cm to 7 cm. The embossed regions 1e are formed at positions away from both end edges in the second direction of each facing part 1c on which the embossed regions 1e are formed. Specifically, the embossed regions 1e are formed at positions preferably 5 cm to 20 cm, more preferably 10 cm to 15 cm away from both the end edges in the second direction of each facing part 1c on which the embossed regions 1e are formed. A proportion of areas of the embossed regions 1e in an area of each facing part 1c on which the embossed regions 1e are formed is not particularly limited, and is preferably 20% to 50%, and more preferably 30% to 40%.

Because the embossed regions 1e are formed on the facing part 1c as described above, it is possible to reduce positional deviation of stacked packages 10 due to slippage of the stacked packages 10. In addition, it is possible to reduce a chance of stacked packages 10 adhering to each other more than necessary and being fixed, and being difficult to separate from each other.

As described above, a package 10 according to each of the embodiments described above can be stably stacked in multiple layers and can reduce damage of falling impact.

That is, by an interval X between at least a part of a one-end-side closing part 10b and one end edge in a first direction of a bag 1 satisfying the above mathematical formula (A), and by a container 10a satisfying the above mathematical formula (B), it is possible to stably stack a plurality of packages 10 and to reduce damage of a package 10 when the package 10 falls.

In addition, because the bag 1 is formed of a polyethylene sheet material as in the second embodiment, it is possible to reduce a chance of a foreign substance originating from the bag 1 (foreign substance separated from the bag 1) mixing into a granular material A as content. Moreover, it is possible to reduce a chance of liquid, such as rain, permeating into the bag 1. Furthermore, hermetic sealing with heat sealing reduces a chance of a sewing thread mixing into the content, and air tightness can be improved.

In addition, because the bag 1 includes a gusset part 1d, the pair of facing parts 1c, 1c are attached to and detached from each other according to an amount of the granular material A. Therefore, the container 10a can easily satisfy the condition of the above mathematical formula (B).

In addition, if the granular material A is polymer pellets, it is possible to reduce void space in the bag 1 when filling the bag 1. Therefore, the filling efficiency can be increased.

A package according to the present invention is not limited to the embodiments described above, and various modifications can be made without departing from the scope of the present invention. In addition, it is a matter of course that the configurations, methods, and the like of the plurality of embodiments described above and below may be arbitrarily adopted and combined (a configuration, a method, or the like according to one embodiment may be applied to a configuration, a method, or the like according to another embodiment).

For example, in the first embodiment, the bag 1 is formed of a paper sheet material, and in the second embodiment, the bag 1 is formed of a resin sheet material. However, the present invention is not limited thereto. For example, a resin sheet material may be used in the first embodiment, and a paper sheet material may be used in the second embodiment.

In the embodiments described above, a bag 1 includes a pair of gusset parts 1d, 1d. However, the present invention is not limited thereto. For example, the bag 1 may not include the pair of gusset parts 1d, 1d.

In the embodiments described above, another end part in a first direction of the bag 1 is sewn, heat-sealed, or the like to form an another-end-side closing part 1b. However, the present invention is not limited thereto. For example, in a case a pair of facing parts 1c, 1c is formed by folding a sheet material in two along a second direction, and the bag 1 is formed by joining both end edges in the second direction of the pair of facing parts 1c, 1c, the another-end-side closing part 1b may be formed by a bent part formed when the sheet material is folded in two.

In the second embodiment described above, the embossed regions 1e are continuously formed over the entire region in the first direction of the bag 1. However, the present invention is not limited thereto. For example, a plurality of embossed regions 1e may be intermittently formed in the first direction.

In the embodiments described above, the one-end-side closing part 10b is formed at a position entirely separated from one end edge in the first direction of the bag 1. However, the present invention is not limited thereto. For example, a part of the one-end-side closing part 10b may be in contact with one end edge in the first direction of the bag 1, or may be positioned at a position less than 5 mm from the one end edge. In the embodiments described above, the another-end-side closing part 1b is formed at a position entirely separated from another end edge in the first direction of the bag 1. However, the present invention is not limited thereto. For example, a part of the another-end-side closing part 1b may be in contact with another end edge in the first direction of the bag 1, or may be positioned at a position less than 5 mm from the another end edge.

Examples

Hereinafter, the present invention will be described more specifically by using Examples and Comparative Examples. However, the present invention is not limited to the following Examples.

<Preparation of package>

Packages were prepared by filling polyethylene pellets (static bulk density 541kg/m$^3$, weight 20 kg) in each polyethylene bag 1 according to the second embodiment (length in first direction: 85.5 cm, length in second direction: 44 cm, length of gusset part 1d (folded width W x 2): 13.3 cm, interval from another end edge to another-end-side closing part 1b in first direction: 5.5 cm, basis weight: 140 g/m$^2$, width of embossed region 1e: 7.5 cm, interval between embossed regions 1e: 5.0 cm, distance to embossed region 1e from each of both end edges in second direction of each facing part 1c on which embossed regions 1e are formed: 12.0 cm, proportion of areas of embossed regions 1e in area of each facing part 1c on which embossed regions 1e are formed: 34%). In each of Examples and Comparative Examples, 10 packages were prepared. A one-end-side closing part 10b and an another-end-side closing part 1b were formed with heat sealing to have a width of 4 mm. Table 1 below shows intervals X from one end edge to one-end-side closing part 10b in the first direction of the bag 1, and ratios (aspect ratio a/b) of a length (a) of the container 10a in the third direction to a length (b) of the container 10a in the second direction.

<Stacking test>

The packages of Examples and Comparative Examples were stacked on a horizontal floor surface, and the numbers of stacked layers were evaluated. Table 1 below shows the numbers of stacked layers.

<Bag anti-breakage strength>

The packages were dropped 10 times from a height of 1 m, and whether or not a position at the one-end-side closing part 10b of each of the bags was broken was evaluated. Table 2 below shows intervals X from one end edge to one-end-side closing part 10b in the first direction of a bag 1, and evaluation results.

[Table 1]

|  | Example 1 | Example 2 | Example 3 | Example 4 | Example 5 | Comparative Example 1 |
|---|---|---|---|---|---|---|
| X (mm) | 55 | 105 | 155 | 205 | 255 | 285 |
| c (cm) | 73 | 71 | 63 | 56 | 50 | 47 |
| a (cm) | 11.0 | 13.0 | 14.0 | 15.5 | 19.0 | 22.0 |
| b (cm) | 50.0 | 49.5 | 48.5 | 47.0 | 46.0 | 45.5 |
| a/b | 0.22 | 0.26 | 0.29 | 0.33 | 0.41 | 0.48 |
| Number of stacked layers | 10 | 10 | 10 | 10 | 10 | 7 |
| *Comparative Example 1: The package 10 on the 8th layer fell. | | | | | | |

[Table 2]

|  | Example 6 | Comparative Example 2 |
|---|---|---|
| X (mm) | 10 | 0 |
| Number of drops until bag breakage | 10 (not broken) | 7 |

<Conclusion>

As can be seen from Table 1, the number of stacked layers in each of Examples is larger than the number of stacked layers in Comparative Example 1.

As can be seen from Table 2, the number of drops until bag breakage is smaller in Comparative Example 2 than in Example 6. That is, by setting an interval X from one end edge to one-end-side closing part 10b in the first direction of the bag 1, and an aspect ratio (a/b) to within the scope of the present invention, it is possible to stably stack a plurality of packages and to reduce damage of a package when the package falls.

**Claims**

1. A package in which a bag contains a granular material, the package comprising:

   a container containing the granular material; and
   a one-end-side closing part closing the container at one end side in a first direction and extending in a second direction intersecting the first direction, wherein
   an interval X between one end edge and one-end-side closing part of the bag in the first direction satisfies the following mathematical formula (A):

$$5 \text{ mm} \leq X,$$

   and when placed on a horizontal placement surface such that a third direction intersecting the first direction and the second direction corresponds to a vertical direction, the container has a length (c) of 40 cm to 100 cm in the first direction, a length (b) of 30 cm to 60 cm in the second direction, and a length (a) of 5 cm to 30 cm in the third direction, and satisfies the following mathematical formula (B):

$$a/b < 0.48$$

2. The package according to claim 1, wherein the bag is formed of a paper sheet material.

3. The package according to claim 1, wherein the bag is formed of a polyethylene sheet material.

4. The package according to any one of claims 1 to 3, wherein the bag includes a gusset part.

5. The package according to any one of claims 1 to 4, wherein the granular material is polymer pellets.

6. The package according to any one of claims 1 to 5, wherein the granular material is polyolefin pellets.

[Fig. 1]

[Fig. 2]

[Fig. 3]

[Fig. 4]

[Fig. 5]

[Fig. 6]

[Fig. 7]

Europäisches
Patentamt

European
Patent Office

Office européen
des brevets

# EUROPEAN SEARCH REPORT

Application Number

EP 22 16 2687

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/078973 A1 (IAMS COMPANY [US]; ELLSWORTH JUSTIN ALAN [US] ET AL.) 30 June 2011 (2011-06-30) * pages 1-18 * * figures 1-7 * | 1-6 | INV.<br>B65D30/20<br>B65D33/00<br>B65D33/22<br>B65D33/26 |
| Y | WO 93/18984 A1 (DU PONT [US]) 30 September 1993 (1993-09-30) * pages 1-6 * | 1-6 | |
| Y | US 5 611 626 A (WARR CHARLES J [US]) 18 March 1997 (1997-03-18) * column 1, line 4 – column 5, line 47 * * figures 1-7 * | 1-6 | |
| A,D | JP 2008 308174 A (DIATEX KK) 25 December 2008 (2008-12-25) * paragraphs [0001] – [0073] * * figures 1-7 * | 1-6 | |
| A | US 2005/276521 A1 (PRICE CHARLES E [US]) 15 December 2005 (2005-12-15) * paragraphs [0001] – [0049] * * figures 1-18E * | 1-6 | **TECHNICAL FIELDS SEARCHED (IPC)**<br><br>B65D |
| A | EP 3 012 089 A1 (MURAPLAST D O O [HR]) 27 April 2016 (2016-04-27) * paragraphs [0001] – [0032] * * figures 1-10 * | 1-6 | |

The present search report has been drawn up for all claims

| Place of search | Date of completion of the search | Examiner |
|---|---|---|
| Munich | 26 August 2022 | Duc, Emmanuel |

EPO FORM 1503 03.82 (P04C01)

## ANNEX TO THE EUROPEAN SEARCH REPORT
## ON EUROPEAN PATENT APPLICATION NO.

EP 22 16 2687

This annex lists the patent family members relating to the patent documents cited in the above-mentioned European search report.
The members are as contained in the European Patent Office EDP file on
The European Patent Office is in no way liable for these particulars which are merely given for the purpose of information.

26-08-2022

| Patent document cited in search report | | Publication date | Patent family member(s) | | Publication date |
|---|---|---|---|---|---|
| WO 2011078973 | A1 | 30-06-2011 | AR | 079664 A1 | 08-02-2012 |
| | | | AU | 2010333882 A1 | 12-07-2012 |
| | | | BR | 112012015098 A2 | 18-07-2017 |
| | | | CA | 2782746 A1 | 30-06-2011 |
| | | | EP | 2516285 A1 | 31-10-2012 |
| | | | RU | 2012121459 A | 27-01-2014 |
| | | | US | 2011150368 A1 | 23-06-2011 |
| | | | WO | 2011078973 A1 | 30-06-2011 |
| WO 9318984 | A1 | 30-09-1993 | CN | 1063084 A | 29-07-1992 |
| | | | DE | 69214462 T2 | 20-03-1997 |
| | | | EP | 0630342 A1 | 28-12-1994 |
| | | | JP | 3046841 B2 | 29-05-2000 |
| | | | JP | H07504873 A | 01-06-1995 |
| | | | US | 5110641 A | 05-05-1992 |
| | | | WO | 9318984 A1 | 30-09-1993 |
| US 5611626 | A | 18-03-1997 | US | 5558438 A | 24-09-1996 |
| | | | US | 5611626 A | 18-03-1997 |
| JP 2008308174 | A | 25-12-2008 | JP | 5054436 B2 | 24-10-2012 |
| | | | JP | 2008308174 A | 25-12-2008 |
| US 2005276521 | A1 | 15-12-2005 | AT | 412583 T | 15-11-2008 |
| | | | EP | 1794059 A2 | 13-06-2007 |
| | | | US | 2005276521 A1 | 15-12-2005 |
| | | | WO | 2005118415 A2 | 15-12-2005 |
| EP 3012089 | A1 | 27-04-2016 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008308174 A